# EUROPÄISCHE PATENTSCHRIFT

(11) **EP 3 071 349 B1**
(45) Veröffentlichungstag und Bekanntmachung des Hinweises auf die Patenterteilung: **17.06.2020**
(21) Anmeldenummer: 14796469.6
(22) Anmeldetag: 04.11.2014
(51) Int. Cl.: B21J 15/02, B21J 15/32

(54) **WERKZEUG ZUM ANBRINGEN EINES FUEGEELEMENTS AN EINEM BAUTEILABSCHNITT**
DEVICE FOR ATTACHING A JOINING ELEMENT TO A PORTION OF A COMPONENT
DISPOSITIF POUR POSER UN ÉLÉMENT DE FIXATION DANS UNE PIÈCE

(30) Priorität: 22.11.2013 DE 102013019518
(43) Veröffentlichungstag der Anmeldung: 28.09.2016
(73) Patentinhaber: Tox Pressotechnik GmbH & Co. KG, 88250 Weingarten (DE)
(72) Erfinder: BADENT, Michael, 88250 Weingarten (DE)
(74) Vertreter: Otten, Roth, Dobler & Partner mbB Patentanwälte
(86) Internationale Anmeldenummer: PCT/EP2014/073649
(87) Internationale Veröffentlichungsnummer: WO 2015/074861

(56) Entgegenhaltungen:
- DE-A1- 19 746 669
- DE-A1-102004 011 846
- US-A1- 2012 324 690

## Beschreibung

### Stand der Technik

Vorrichtungen bzw. Werkzeuge zum Anbringen von Fügeelementen an Bauteilen sind bekannt, beispielsweise Vorrichtungen für Niet-Werkzeuge. Mit solchen Vorrichtungen bzw. Werkzeugen können Fügeelemente wie beispielsweise Funktionselemente bzw. Halbhohlstanznieten, Vollstanznieten oder Clinchnieten verarbeitet werden. Die für einen Fügepunkt am Bauteil vorgesehenen Fügeelemente werden vor deren Anbringung am Bauteil von einer Vorlageposition am bzw. im Werkzeug mit einem linear bewegbaren Werkzeugstempel an das Bauteil heranbewegt und dort unter Krafteinwirkung angebracht.

Die DE 10 2004 011 846 A1 betrifft eine Vorrichtung zur Zuführung von Hilfsfügeteilen. Die US 2012/0324690 A1 schlägt einen Nietführungskopf vor. Die DE 197 46 669 A1 offenbart eine weitere Alternative.

### Aufgabe und Vorteile der Erfindung

Aufgabe der vorliegenden Erfindung ist es, einleitend genannte Vorrichtungen bzw. Werkzeuge im Hinblick auf eine hohe Standzeit zu verbessern, insbesondere um durch Verschmutzungen hervorgerufene Störungen zu vermeiden, die entlang des Bewegungswegs der Fügeelemente an der bzw. in der Vorrichtung angesiedelt sind.

Diese Aufgabe wird durch Anspruch 1 gelöst.

Die abhängigen Ansprüche betreffen vorteilhafte Varianten der Erfindung.

Die Erfindung geht aus von einem Vorrichtung zum Anbringen eines Fügeelements an einem Bauteilabschnitt für ein Werkzeug zum Anbringen eines Fügeelements an einem Bauteilabschnitt mit einer Matrizeneinheit und einem Stempel, der auf einer Arbeitsachse des Werkzeugs aus einer zurückbewegten Position am Werkzeug zur Matrizeneinheit linear hinbewegbar und wieder zurückbewegbar ist, wobei die Arbeitsachse mit einer Stempellängsachse zusammenfällt, und wobei der Stempel bei seiner Hinbewegung zur Matrizeneinheit ein an der Vorrichtung in einer Vorlageposition vorgelegtes Fügeelement in Richtung des Bauteilabschnitts mitnimmt. Der Stempel bewegt sich nach dem Fügevorgang auf der Arbeitsachse aus einer ausgefahrenen Position wieder in die zurückbewegte Position. Die Stempellängsachse ist insbesondere eine zentrale Symmetrieachse des Stempels, welche mit der Arbeitsachse zusammenfällt.

Das Werkzeug umfasst außerdem eine Kontrolleinheit insbesondere mit einer Rechnereinheit zur Kontrolle der Betriebsvorgänge bzw. der Antriebseinheit.

Der Kern der Erfindung liegt darin, dass ein auf ein Fügeelement abgestimmter Positionierabschnitt im Bereich der Vorlageposition derart ausgebildet ist, dass das Fügeelement mit einer vorgegebenen Ausrichtung derart in der Vorlageposition gehalten ist, dass eine Längsachse des Fügeelements von der Arbeitsachse räumlich abweicht. Die Längsachse des Fügeelements ist insbesondere eine Symmetrieachse des Fügeelements. Bei einem im Wesentlichen außenzylindrischen Fügeelement ist die Längsachse zum Beispiel eine zentrale Achse, welche die Mittelachse der dazugehörigen Zylinderform bildet.

Bevorzugt fällt die Arbeitsachse mit einer zentralen Mittel- bzw. Symmetrieachse des Stempels zusammen.

Das Fügeelement ist in der Vorlageposition insbesondere positionsfest gehalten. In der Regel wird ein Fügeelement zuvor über einen Förderkanal oder dergleichen von außerhalb der Vorrichtung bzw. des Werkzeugs an die Vorrichtung heran und in die Vorlageposition zum Beispiel pneumatisch gefördert. Bei Erreichen der Vorlageposition ist der Stempel zurückbewegt, so dass vor dessen vorderer Stirnseite der Bereich der Vorlageposition frei ist für das Vorlegen des nächsten Fügeelements. In der Vorlageposition, welche einer Warteposition des zuvor von außerhalb herantransportierten Fügeelements entspricht, verbleibt das Fügeelement bis der Stempel das Fügeelement abholt und in Richtung der Matrizeneinheit mit dem darauf abgestützten Bauteilabschnitt schiebt.

Die vorgeschlagene Anordnung ist insbesondere im Hinblick auf eine Minimierung von Störungen durch Verschmutzungen im Bereich der Vorlageposition und entlang des anschließenden Herausrückens der Fügeelemente in der Vorrichtung, was durch den Stempel geschieht, vorteilhaft.

Die Position bzw. Ausrichtung des vorgelegten Fügeelements in der Vorlageposition und damit der Fügeelement-Längsachse weicht erfindungsgemäß von einer Position bzw. Ausrichtung ab, welche das Fügeelement anschließend auf dem Weg zum Bauteilabschnitt aufweist, wenn es vor dem Stempel z. B. in einer Bohrung eines Niederhalters der Vorrichtung bzw. des Werkzeugs hergeschoben wird. Mit der erfindungsgemäßen Abweichung der Fügeelement-Längsachse zur Arbeitsachse wird das Fügeelement vom Stempel zwangsweise zunächst aus der Vorlageposition herausbewegt, bis die Fügeelement-Längsachse mit der Arbeitsachse bzw. mit der Stempellängsachse übereinstimmt. Dann wird das Fügeelement wie bei bekannten Vorrichtungen zum Bauteilabschnitt bewegt.

Erfindungsgemäß wird also zuerst eine zwangsweise Versatzbewegung des Fügeelements aus der Vorlageposition, die auch als Warteposition des Fügeelements angesehen werden kann, eingerichtet, bevor das Fügeelement weiterbewegt wird. Der Vorteil der Versatzbewegung beim Herausrücken aus der Vorlageposition in die anschließende Weitertransportposition liegt darin, dass Verschmutzungen im Bereich der Vorlageposition das Herausrücken des Fügeelements in die exakte Weitertransportposition nicht behindern.

Die Versatzbewegung ist vielmehr geeignet, dass im Werkzeugbetrieb mit der Zeit sich im Bereich der Vorlageposition anhaftenden Verschmutzungen, die nie auszuschließen sind, sich nur insofern auswirken können, dass die Länge des Herausrückweges des vorgelegten Fügeelements aus der Vorlageposition, die sich mit der Zeit schmutzbedingt etwas verändert, verkleinert wird. Die Richtung der Herausrückbewegung ist in der Regel eine andere, zum Beispiel quer gegenüber einer anschließenden reinen Linearbewegung in Richtung zur Matrizeneinheit hin. Die gewünschte Endposition der Herausrückbewegung bleibt aber unverändert erhalten und wird insbesondere nicht überschritten. Die Abweichung der Längsachse des Fügeelements in der Vorlageposition zur Arbeitsachse, bestimmt im unverschmutzten Zustand ein maximales Maß eines Schmutzpuffers und ist so abgestimmt, dass in der Praxis selbst bei ungünstigen Verhältnissen, die Vorlageposition immer derart ist, dass das Fügeelement in der Vorlageposition immer zur Arbeitsachse derart abweicht, dass der sich auf das Fügeelement zubewegende Stempel das Fügeelement aus der Vorlageposition immer in die gleiche Richtung zur Arbeitsachse zurück versetzt.

Um die vorgeschlagene Vorlageposition zu erreichen, wird jedes Fügeelement aus einer Förderleitung zum Herantransportieren der einzelnen Fügeelemente in die Vorlageposition über die Arbeitsasche hinaus in die Vorlageposition transportiert. Jedes Fügeelement passiert also zunächst einen Bereich, in welchen das Fügeelement anschließend beim Mitnehmen durch den Stempel wieder zurückbewegt wird. Damit ist das Zurückbewegen des Fügeelements aus der Vorlageposition zwingend eingerichtet, was gewünscht ist. Die erfindungsgemäße Anordnung mit einem Zurückbewegen des Fügeelements aus der Vorlageposition ist bei bekannten Vorrichtungen bzw. Werkzeugen nicht existent.

Bisher führen Verschmutzungen im Bereich einer Warte- bzw. Mitnahmeposition des Fügeelements dazu, dass das Fügeelement nicht mehr eine ideale Position einnimmt und daher verklemmen oder verkanten kann, wenn der Stempel auf das Fügeelement trifft und es mitnehmen möchte.

Verschmutzungen sind gerade im Bereich der Vorlage- bzw. Warteposition relevant, weil in der Vorlage- bzw. Warteposition auch eine Änderung der Bewegungsrichtung des Fügeelements stattfindet, so dass Schmutzablagerungen in der Vorlageposition begünstigt sind. Mit jedem Fügelement werden Schmutzpartikel mitgeführt, die zwar einzeln vergleichsweise gering bzw. tolerierbar sind, sich jedoch mit der im Dauerbetrieb steigenden Zahl an verarbeiteten Fügeelementen im Bereich der Vorlageposition aufsummieren bzw. sich zumindest teilweise an zur Vorlageposition benachbarten Vorrichtungsabschnitten ablagern bzw. haften bleiben.

Bei bekannten Vorrichtungen bzw. Werkzeugen werden die Fügeelemente in eine Vorlageposition gebracht, so dass im unverschmutzten Zustand des Werkzeugs ein herantransportiertes Fügeelement exakt unterhalb des zurückbewegten Stempels z. B. fluchtend zu diesem bzw. symmetrisch zur Stempellängsachse positioniert ist. Diese Vorgehensweise funktioniert auf Dauer, wenn keine Verschmutzungen auftreten, die es aber in der Praxis immer gibt.

Dies führt bisher dazu, dass die Längsachse der jeweiligen Fügeelemente mit der Zeit durch eine sich aufbauende Schmutzschicht in eine Abholposition gedrängt werden, die von der eigentlichen bzw. im unverschmutzten Zustand exakten Vorlageposition abweicht. Damit wird mit der Zeit die Position eines vorgelegten Fügeelements entgegen der Richtung, aus welcher die Fügeelemente in die Vorlageposition herangefördert werden, verschoben. Dies führt unweigerlich dazu, dass abhängig vom Verschmutzungsgrad im Bereich der Vorlageposition ein Zeitpunkt erreicht wird, in dem sich ein Fügeelement in einer Warteposition befindet, die entsprechend der Schmutzschicht zur Arbeitsachse in Richtung der Förderleitung bzw. seitlich versetzt ist zur idealen bzw. exakten Vorlageposition im unverschmutzten Zustand, dass das Fügeelement mit einem oberen oder unteren Randbereich in die quer zur Bewegungsweg des Stempels vorhandene Zuführleitung hineinsteht oder an anderen festen Werkzeugabschnitten mechanisch anstößt. Wird nun der zurückbewegte Stempel in Richtung auf das Fügeelement bewegt, um dieses mitzunehmen, stößt das Fügeelement gegen feste Werkzeugabschnitte. Dies führt zu Störungen und/oder Beschädigungen am Werkzeug insbesondere an einer Antriebseinheit für den Stempel, am Stempel selbst, am Fügeelement und/oder an angrenzenden Werkzeugabschnitten. Auch dadurch bedingt nicht korrekt am Bauteilabschnitt angebrachte Fügeelemente sind denkbar.

Mit der erfindungsgemäßen Vorrichtung wird insbesondere vorteilhafterweise ein kritisches Wegrücken in der Vorlageposition und damit ein mögliches Verkanten oder Verdrehen des Fügeelements beim Weiterbewegen des Fügeelements aus der Vorlageposition sicher vermieden. Insbesondere wird durch die vorgeschlagene Vorlageposition mit der Abweichung der Längsachse des Fügeelements zur Arbeitsachse ein räumlicher Bereich für Verschmutzungen bereitgestellt, so dass aufgrund von Anlagerungen von Schmutzpartikeln das Fügeelement zwar von einer Positionierung in der Vorlageposition im unverschmutzten Zustand abweicht, diese Abweichung erfolgt aber in einem tolerierbaren Maß, das durch das Maß der Abweichung der Fügeelement-Längsachse von der Arbeitsachse bestimmt ist, so dass beim Weiterbewegen des Fügeelements aus der Vorlageposition durch den Stempel, sowohl ohne als auch mit Verschmutzungen im Bereich der Vorlageposition, das Fügeelement nicht verkantet oder klemmt.

Insbesondere ist durch die Abweichung der Längsachse des Fügeelements von der Arbeitsachse gewährleistet, dass das Fügeelement durch den sich nach vorne bewegenden Stempel bzw. in Richtung der Matrizeneinheit sich bewegenden Stempel immer funktionsrichtig mitgenommen wird. Die Relativbewegung des Fügeelements aus der Vorlageposition in eine Position, an die nur noch eine lineare Fügeelement-Bewegung entlang der Arbeitsachse anschließt, findet vorteilhafterweise immer statt, im unverschmutzten als auch im in der Praxis immer zu erwartenden verschmutzten Zustand des Werkzeugs. In beiden Fällen findet eine Relativbewegung des Fügeelements von der Vorlageposition in die Richtung statt, aus welcher das Fügeelement über die Zuführleitung herantransportiert wurde. Dieses Zurückbewegen findet bis in eine Position statt, in welcher das Fügeelement komplett aus der Vorlageposition herausbewegt ist, bis das Fügeelement anschließend nur noch linear entlang der Arbeitsachse bewegt wird. Das Zurückbewegen des Fügeelements aus der Vorlageposition erfolgt vorgebbar bzw. definiert. Beim Zurückbewegung kann das Fügeelement quer, schräg bzw. entlang einer Bahnkurve relativ zur Arbeitsachse bewegt werden und/oder um einen Punkt verschwenkt bzw. gekippt werden.

Durch die Abweichung der Längsachse von der Arbeitsachse bzw. dem damit eingerichteten Versatz dieser Achsen findet mit dem nach vorne fahrenden Stempel beim Mitnehmen des Fügeelements auch eine geringfügige Relativbewegung des Fügeelements bezogen auf eine stirnseitige Fläche des Stempels an dessen mit dem Fügeelement kontaktierenden freien Ende statt.

Das Fügeelement wird im Bereich seines Fügeelementkopfes im unverschmutzten Zustand in der Vorlageposition aus einer insbesondere teilweise formschlüssigen Lage in der Vorlageposition vom Stempel herausbewegt und in Richtung Matrizeneinheit bzw. auf ein vorgelegtes Bauteil bewegt und dort angebracht. Das Fügeelement kann in der Vorlageposition zum Beispiel durch Ansaugen aufgrund eines am Fügeelement angelegten Unterdrucks positionsfest gehalten sein, bis der aus der zurückbewegten Position vorfahrende Stempel das Fügeelement vor sich herschiebend mitnimmt.

Des Weiteren ist es erfindungsgemäß, dass der Positionierabschnitt eine auf eine Außenform des Fügeelements abgestimmte Anlagekontur umfasst, wobei das Fügeelement durch passende Anlage an der Anlagekontur in einer durch die Form der Anlagekontur vorgegebenen Ausrichtung in der Vorlageposition gehalten ist. Die Anlage des Fügeelements an der Anlagekontur erfolgt in angeschmiegter Weise bzw. ggf. formschlüssig. Die Anlagekontur kann zum Beispiel an den Teil einer Außenform des Fügeelements abgestimmt sein, der mit der Anlagekontur in Kontakt kommt. Gegebenenfalls kann im Bereich der Anlagekontur eine Freilassung bzw. eine Öffnung vorhanden sein, insbesondere eine Öffnung einer an die Anlagekontur heranreichende Bohrung einer Ansaugleitung zum Halten des Fügeelements. Mit der abgestimmt geformten Anlagekontur ist jedes entsprechend geformte über z. B. eine Zuführleitung herantransportierte Fügeelement in der Vorlageposition definiert und reproduzierbar bzw. identisch ausgerichtet positionierbar.

Erfindungsgemäß sind die Positioniermittel so ausgestaltet, dass die Längsachse des Fügeelements in der Vorlageposition parallel ausgerichtet zur Arbeitsachse versetzt ist. Die Längsachse des Fügeelements ist demgemäß insbesondere radial versetzt bzw. mit einem seitlichen Versatz zur Arbeitsachse bzw. über diese hinaus versetzt. Die Längsachse des Fügeelements ist insbesondere in Richtung der Bewegung des z. B. über eine Zuführleitung herantransportierten Fügeelements weg versetzt zur Arbeitsachse. Die Längsachse des Fügeelements liegt vorteilhaft in Richtung der Bewegung des herantransportierten Fügeelements hinter der Arbeitsachse. Die Arbeitsachse wird demgemäß auf dem Weg des Fügeelements in die Vorlageposition, z. B. durch einen Luftstrom gefördert, von dem Fügeelement passiert bzw. über die Arbeitsachse hinaus bewegt, um in die Vorlageposition zu gelangen. Erfindungsgemäß wird das Fügeelement aus der Vorlageposition beim Mitnehmen durch den Stempel entgegen der Bewegungsrichtung beim Herantransportieren in die Vorlageposition etwas zurückbewegt. Das Fügeelement wird nach dem Ausrücken aus der Vorlageposition vom Stempel in Richtung Matrizeneinheit weiterbewegt, wobei dann die Fügeelement-Längsachse mit der Arbeitsachse zusammenfällt.

Nicht erfindungsgemäß ist es, wenn die Positioniermittel so ausgebildet sind, dass die Längsachse des Fügeelements in der Vorlageposition schräg ausgerichtet zur Arbeitsachse versetzt ist. Beim Herausbewegen des Fügeelements aus der Vorlageposition wird das Fügeelement dann ggf. etwas geschwenkt oder verkippt, ggf. überlagert von einer linearen Bewegungskomponente des Fügeelements. Damit wird das Fügeelement für den Transport zum Bauteilabschnitt in eine Ausrichtung gebracht, in der die Fügeelement-Längsachse mit der Arbeitsachse zusammenfällt.

Vorteilhafterweise sind für eine vorgegeben geführte Bewegung des Fügeelements aus der Vorlageposition heraus Führungsmittel im Bereich der Vorlageposition derart ausgebildet, dass das Fügeelement aus der Vorlageposition herausbewegbar ist, bis die Längsachse des Fügeelements mit der Arbeitsachse zusammenfällt. Das Herausbewegen wird durch eine Stempelbewegung bewirkt. Beispielsweise kann eine schräge oder gekrümmte Führungsbahn vorhanden sein, entlang derer Außenabschnitte des Fügeelements anliegend entlanggleiten, wenn das Fügeelement vom Stempel aus der Vorlageposition herausgeschoben wird. Die Führungsbahn kann vorteilhaft einen Teil der Anlagekontur bilden.

Eine vorteilhafte Modifikation des Erfindungsgegenstands zeichnet sich dadurch aus, dass die Anlagekontur im Bereich eines Bewegungskanals für den Stempel ausgebildet ist. Der Stempel ist in der Regel außen durch einen Vorrichtungs- bzw. Werkzeugabschnitt umgeben. In einer ausgefahrenen Stellung des Stempels befindet sich dieser in einem Bewegungskanal bzw. einem Hohlkanal eines außen um den Stempel vorhandenen Werkzeugteils. Das den Bewegungskanal umgebende Bauteil erfüllt z. B. die Funktion eines Niederhalters zum stempelseitigen Festdrücken des Bauteilabschnitts der sich beim Fügevorgang auf einer Auflageseite der Matrizeneinheit abstützt.

Ein im Bewegungskanal axialer und teilumfänglicher Bereich einer Innenseite des Bewegungskanals, wobei der Bereich einer Stirnseite des zurückbewegten Stempel benachbart ist, kann vorteilhafterweise die Anlagekontur bilden. Beispielsweise kann ein Bereich der Innenseite des Bewegungskanals eine Abdruckform bzw. Negativform eines Teils der Außenform des Fügeelements abbilden bzw. dieser zumindest angenähert nachgebildet sein. Das in der Anlagekontur in der Vorlageposition vorgelegte Fügeelement muss vom Stempel bei einem Fügevorgang vorteilhafterweise nur um eine vergleichsweise kurze Wegstrecke in Richtung zur Arbeitsachse hin versetzt werden, um das Fügeelement zentral in den Bewegungskanal zu bringen.

Gegebenenfalls kann das Fügeelement beim Versetzen aus der Vorlageposition in die zentrale Position im Bewegungskanal des Stempels pneumatisch beaufschlagt sein, so dass das Fügeelement dauerhaft und definiert ausgerichtet gegen die Anlagekontur bzw. gegen Abschnitte der Führungsmittel gedrückt bzw. an diese angesaugt wird. Damit bleibt das Fügeelement auch während des Weiterbewegens aus der Vorlageposition durch den Stempel immer in definierter Ausrichtung. Dies ist insbesondere deshalb vorteilhaft, weil damit das Fügeelement nicht ungewollt zu weit quer zur Arbeitsachse zurückversetzt oder verkippt wird.

Es ist weiterhin vorteilhaft, dass die Anlagekontur gegenüberliegend zu einer Zuführöffnung zum Zuführen eines Fügeelements in die Vorlageposition vorhanden ist. In der Regel wird eine Mehrzahl von Fügeelementen in einer Vorlage außerhalb der Vorrichtung bzw. des Werkzeugs vorgelegt und über eine Zuführleitung oder dergleichen an die Vorrichtung bzw. unter Passieren der Zuführöffnung in die Vorlageposition gefördert. Das Fügeelement ist beim Erreichen der Zuführöffnung zumindest annähernd so ausgerichtet wie anschließend in der Vorlageposition. Vorteilhafterweise ist die Anlagekontur gegenüber der Zuführöffnung, so wird das Fügeelement geradlinig gefördert, dabei den Bewegungskanal des Stempels überbrückend, bis das Fügeelement die Anlagekontur erreicht. Die Anlagekontur dient ggf. als mechanischer Anschlag für das ankommende Fügeelement. In der Vorlageposition verharrt das z. B. angesaugte Fügeelement bis es vom Stempel mitgenommen und weiterbewegt wird.

Es ist außerdem vorteilhaft, dass die Anlagekontur zumindest bereichsweise eine konkave Form aufweist, welche auf eine Außenform des Fügeelements abgestimmt ist. Häufig weisen die Fügeelemente insbesondere einen Schaftbereich mit einer außen konvexen z. B. zylindrischen oder elliptischen Form auf. Damit das Fügeelement in der Anlagekontur richtig ausgerichtet und sicher festhaltbar ist, ist die Anlagekontur für einen flächigen Anlagekontakt mit einer Außenseite des Fügeelements entsprechend ausgestaltet.

Auch ist es erfindungsgemäß, dass die Anlagekontur einen in Richtung der Arbeitsachse konvex verlaufenden Abschnitt aufweist, der auf eine Form einer am Fügeelement vorhandenen Hohlkehle im Bereich eines Fügeelementkopfes abgestimmt ist. Die konvexe Form bzw. der konvexe Abschnitt der Anlagekontur kann in der Vorlageposition des Fügeelements an die Hohlkehle des Fügeelementkopfes flächig in Anlage kommen.

Schließlich ist es erfindungsgemäß, dass im Bereich der Anlagekontur eine Verbindung zu einer Unterdruckleitung ausgebildet ist. So kann am Fügeelement, das in der Vorlageposition vorgelegt ist, ein Unterdruck im Bereich der Anlagekontur eingerichtet werden. Mit dem Unterdruck kann das vorgelegte Fügeelement in der Vorlageposition korrekt ausgerichtet und positionsfest angesaugt gehalten werden. Die Nutzung von Unterdruck als Haltemechanismus ist vorteilhaft, da dies ohne mechanisch bewegbare Teile im Bereich der Vorlageposition möglich ist. So kann die erfindungsgemäße Vorrichtung gegenüber einer Anordnung, bei welcher andernfalls zum Halten des Fügeelements in der Vorlageposition mechanische Haltemittel nötig sind und eine Kollisionsgefahr für das Fügeelement bzw. den sich nach vorne und zurück bewegenden Stempel darstellen, verbessert werden.

Die Erfindung betrifft ein Werkzeug zum Anbringen eines Fügeelements an einem Bauteilabschnitt mit einer Matrizeneinheit und einem Stempel wobei eine Vorrichtung gemäß einer der vorgenannten Varianten vorhanden ist.

### Figurenbeschreibung

Weitere Merkmale und Vorteile der Erfindung sind anhand eines schematisch dargestellten Ausführungsbeispiels eines erfindungsgemäßen Werkzeuges näher erläutert. Im Einzelnen zeigt:
- Figur 1: einen Teil eines erfindungsgemäßen Werkzeuges mit einer daran anschließenden Zuführleitung im Schnitt und
- Figur 2: einen vergrößerten Ausschnitt aus Figur 1.

In den Figuren ist ein Teil eines erfindungsgemäßen als Nietwerkzeug 1 ausgebildeten Werkzeugs zum Verarbeiten von Fügeelementen mit einer Fügeelement-Zuführung geschnitten und schematisiert dargestellt. Ein im Nietwerkzeug 1 einzeln vorgelegtes Fügeelement ist beispielhaft als Halbhohlstanzniet 2 dargestellt, welches vom Nietwerkzeug 1 verarbeitbar ist. Der Halbhohlstanzniet 2 ist in einer Warte- bzw. Vorlageposition 3 im Nietwerkzeug 1 positionsfest gehalten. Das Halbhohlstanzniet-Werkzeug 1 dient zum Einbringen des Halbhohlstanzniets 2 in zum Beispiel zwei oder mehreren miteinander zu verbindenden Materiallagen (nicht gezeigt), die beispielsweise aus einem metallischen bzw. anderen Material bestehen.

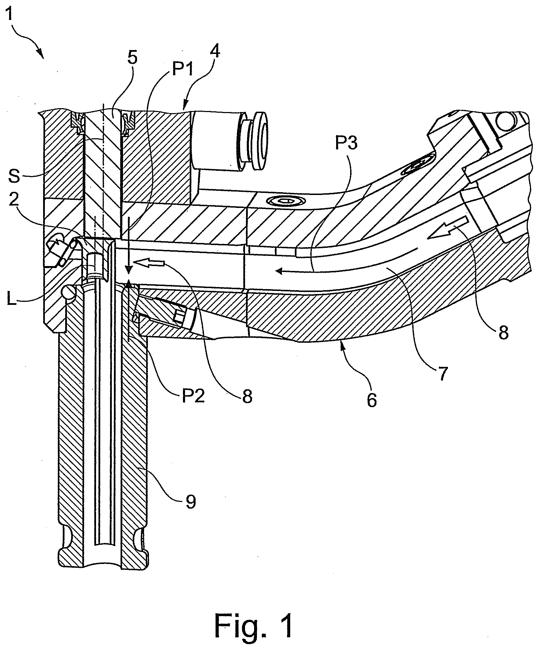

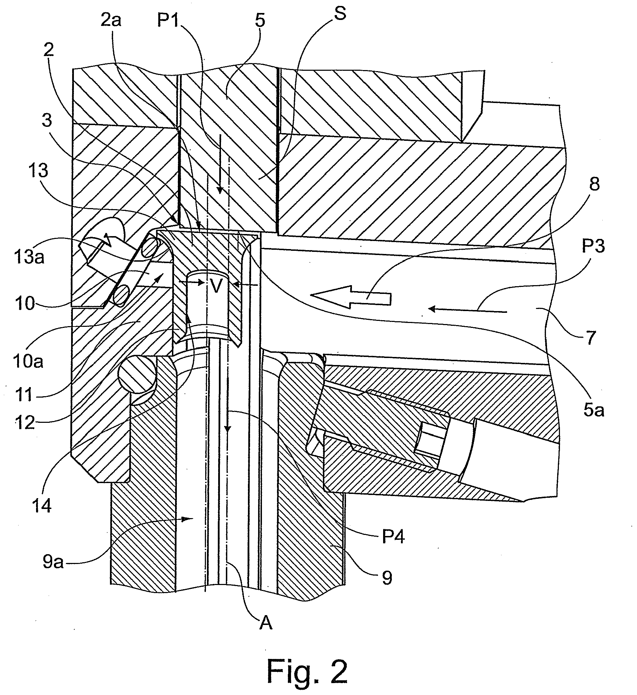

Für die Positionierung des Halbhohlstanzniets 2 in der Vorlageposition 3 am Nietwerkzeug 1 wird der Halbhohlstanzniet 2 von einem zum Nietwerkzeug 1 entfernten Speicher für eine Vielzahl von Halbhohlstanznieten über z. B. einen Zuführschlauch (nicht ersichtlich) und eine daran werkzeugseitig anschließende Zuführung 6 mit einem Zuführkanal 7 für die Halbhohlstanzniete in Richtung P3 in einen Nietsetzkopf 4 des Nietwerkzeugs 1 befördert. Ein über eine Antriebseinheit des Nietwerkzeugs 1 gemäß der Pfeile P1 und P2 linear hin- und herbewegbarer als Nietsetzstift 5 ausgebildeter Stempel des Nietwerkzeugs 1 ist in den Figuren 1 und 2 in einer in Richtung P2 zurückbewegten Position vorhanden. Der Nietsetzstift 5 nimmt aus dieser Position für jeden Fügevorgang jeweils einen einzelnen Halbhohlstanzniet aus der für den Halbhohlstanzniet 2 gezeigten Vorlageposition 3 in Richtung P4 mit, indem eine ebene Planfläche bzw. Stirnfläche 5a des in Richtung P1 vorfahrenden Nietsetzstifts 5 auf eine kopfseitige in der Regel ebenfalls ebene Stirnseite 2a des Halbhohlstanzniets 2 einwirkt und den Halbhohlstanzniet 2 in Richtung P1 vorschiebt. Durch das Einwirken der Stirnfläche 5a auf die Stirnseite 2a wird der Halbhohlstanzniet 2, wenn dieser nicht genau ausgerichtet sein sollte, etwas in seiner Ausrichtung verändert bzw. exakt in die gewünschte Ausrichtung gebracht. Dann liegen die Stirnfläche 5a und die Stirnseite 2a parallel aneinander.

Der vom Nietsetzstift 5 vorgeschobene Halbhohlstanzniet 2 wird dann in einem Fügevorgang zum Beispiel in ein Blechpaket gedrückt und die Bleche in einen zumindest formschlüssig verbundenen Zustand gebracht. Der Halbhohlstanzniet 2 durchstanzt wenigstens ein oberes Blech und wird in einem anderen darunterliegenden Blech aufweitend verformt und in den Blechen fest verankert. Auch die Bleche werden dabei im gebildeten Fügepunkt teilweise verformt.

Die Schnittdarstellung des Nietwerkzeugs 1 gemäß der Figuren 1 und 2 ergeben sich durch einen Schnitt entlang der Längsachse des Nietsetzstifts 5.

Der Nietsetzstift 5 ist im in Richtung einer nicht gezeigten Matrizeneinheit des Nietwerkzeugs 1 ausgefahrenen Zustand (nicht dargestellt) außen umfänglich von einem als Niederhalternase 9 ausgebildeten Niederhalter umgeben. Die betreffenden Materiallagen wie z. B. ein Blechpaket liegen beim Fügevorgang mit einer Unterseite auf der Matrizeneinheit auf, wobei die Niederhalternase 9 von oben bzw. stempelseitig andrückend das Blechpaket gegen die Matrizeneinheit fixiert.

Der Halbhohlstanzniet 2 wird aus dem Speicher nicht in Axialrichtung bzw. in Richtung der Längsachse L des Halbhohlstanzniets 2 in den Nietsetzkopf 4 herangeführt, sondern in Querrichtung zur Längsachse L des Halbhohlstanzniets 2 durch die Zuführung 6. So kann vorteilhafterweise der Halbhohlstanzniet 2 unmittelbar unter den Nietsetzstift 5 geschossen werden, wobei auf eine ansonsten notwendige Mechanik zum Beispiel eine Schieber-Mechanik verzichtet werden kann, welche den Halbhohlstanzniet 2 um 90 Winkelgrade dreht, bevor der Stempel den Halbhohlstanzniet 2 in Richtung P4 gemäß der in den Figuren 1 und 2 gezeigten Ausrichtung mit einer Nietunterseite voraus weiterschiebt.

Der Halbhohlstanzniet 2 wird mittels eines Luftstroms 8 in Richtung P3 gefördert und unmittelbar unter den Nietsetzstift 5 bzw. dessen vordere bzw. endseitige ebene Stirnfläche 5a eingeschossen und dort ausgerichtet in der Vorlageposition 3 positionsfest gehalten, was die Figuren 1 und 2 zeigen. Dabei wird der Halbhohlstanzniet 2 durch eine entsprechend dem Luftstrom 8 außen am Halbhohlstanzniet 2 wirkende Druckdifferenz festgehalten. Damit der Halbhohlstanzniet 2 in der Vorlageposition 3 die Druckdifferenz spürt, ist eine Abführleitung für die Luft vorhanden, zum Beispiel auf einer dem anströmenden Luftstrom 8 rückwärtigen Seite des gehaltenen Halbhohlstanzniets 2. Der Halbhohlstanzniet 2 wird damit in die Vorlageposition 3 gedrängt und verbleibt dort, solange der Luftstrom 8 bzw. eine Druckdifferenz existiert.

Im vorliegenden Ausführungsbeispiel ist eine Niederdruckbohrung 10 vorgesehen, in welcher bezogen auf einen Bezugsdruck wie zum Beispiel Umgebungs- bzw. Atmosphärendruck ein Unterdruck oder Niederdruck herrscht. Wenn der Halbhohlstanzniet 2 die Vorlageposition 3 erreicht und eine Öffnung 10a der Niederdruckbohrung 10 verschließt, wird der Halbhohlstanzniet 2 aufgrund des Unterdrucks in der Niederdruckbohrung 10 an die Öffnung 10a angesaugt und verbleibt in der Vorlageposition 3. Mit dem Unterdruck in der Niederdruckbohrung 10 einerseits und einem dazu höheren zum Beispiel einem Umgebungsdruck im verbleibenden Bereich um den Halbhohlstanzniet 2 herum, wird eine Druckdifferenz am Halbhohlstanzniet 2 wirksam, welche den Halbhohlstanzniet 2 in der Vorlageposition festhält. Der Unterdruck in der Niederdruckbohrung 10 kann zum Beispiel durch eine Absaug-oder Vakuumanordnung eingerichtet sein, welche Luft aus der Niederdruckbohrung 10 absaugt.

Die Lage des Halbhohlstanzniets 2 im Nietsetzkopf 4 ist erfindungsgemäß immer eindeutig, insbesondere beim Übergang seiner Bewegungsrichtung von einer Querbewegungsrichtung P3 bis unter den Nietsetzstift 5 zu einer Axialbewegungsrichtung P4, in welcher der Nietsetzstift 5 den Halbhohlstanzniet 2 durch die Niederhalternase 9 schiebt. Wenn sich der Halbhohlstanzniet 2 im Nietwerkzeug 1 bzw. im Nietsetzkopf 4 auch nur geringfügig verkanten oder verdrehen würde, würde dies in den meisten Fällen zur Beschädigung bzw. Zerstörung von Komponenten des Nietsetzkopfes 4 führen.

Der Übergang von der lateralen z. B. horizontalen Zuführung des Halbhohlstanzniets 2 gemäß P3 in die Weiterbewegung des Halbhohlstanzniets 2 durch den Nietsetzstift 5 erfolgt unterstützt durch eine Anlagekontur 14 in einer durchgängigen Bahn ohne Störkonturen und/oder ohne Komponentenversätze. Dadurch wird ein kontinuierlicher, verschleißarmer Transport des Halbhohlstanzniets 2 im Nietwerkzeug 1 gewährleistet insbesondere in die Vorlageposition 3 und aus dieser wieder heraus.

Die Haltekraft auf den Halbhohlstanzniet 2 durch den in der Vorlageposition 3 wirkenden Unterdruck p reist ab, sobald der Halbhohlstanzniet 2 durch Einwirken des herunterfahrenden Nietsetzstiftes 5 minimal bzw. geringfügig aus der Vorlageposition 3 herausgedrängt wird. Dann übernehmen an dem Halbhohlstanzniet 2 in Kontakt kommende Halteabschnitte am Nietsetzkopf 4 die Positionierung bzw. Führung des Halbhohlstanzniets 2. Dabei wird der Halbhohlstanzniet 2 immer definiert ausgerichtet bewegt.

Der gemäß P3 quer zur Bewegungsrichtung P1, P2 des Nietsetzstiftes 5 in den Nietsetzkopf 4 zugeschossene Halbhohlstanzniet 2 trifft auf die Anlagekontur 14 eines Anschlags 11. Die Anlagekontur 14 ist am Anschlag 11 als Wandabschnitt gegenüberliegend zum Zuführkanal 7 ausgebildet, so dass der in Richtung P3 ankommende Halbhohlstanzniet 2 sich passend an die Anlagekontur 14 anschmiegen kann. Die Anlagekontur 14 ist auf einem dem zurückgezogenen Nietsetzstift 5 benachbarten Teil eines Bewegungskanals für den Nietsetzstift 5 im Bereich der Vorlageposition 3 vorhanden. Die Anlagekontur 14 ist auf einen Bereich einer Außenform des Halbhohlstanzniets 2 abgestimmt ausgebildet. Damit wird der Halbhohlstanzniet 2 an die Anlagekontur 14 passend angedrückt bzw. angesaugt, wobei der Halbhohlstanzniet 2 durch die Anlagekontur 3 selbsttätig bzw. in einer definiert vorgegebenen Ausrichtung bzw. Positionierung gehalten ist. Dabei ist im gezeigten Ausführungsbeispiel die Anlagekontur 14 derart, dass die Längsachse des Halbhohlstanzniets 2 parallel zur Längsachse S des Nietsetzstiftes 5 in Richtung P3 des ankommenden Halbhohlstanzniets 2 über eine Arbeitsachse A bzw. über die Mitte des Stempelkanals 9a hinaus versetzt ist. Die Arbeitsachse A definiert den Bewegungsweg des Nietsetzstiftes 5 innerhalb bzw. längs der Niederhalternase 9 und verläuft zentral zum zylindrischen Innen- bzw. Hohlvolumen der Niederhalternase 9 bzw. fällt mit der Längsachse S des Nietsetzstiftes 5 zusammen. In der Vorlageposition 3 weist der Halbhohlstanzniet 2 einen radialen bzw. seitlichen Versatz V zur Längsachse S des Nietsetzstiftes 5 bzw. der Arbeitsachse A auf. Der Versatz V beträgt vorteilhafterweise zum Beispiel etwa ein Drittel des Durchmessers eines außen zylindrischen Schaftes 12 des Halbhohlstanznietes 2.

Der Anschlag 11 befindet sich unmittelbar unter dem Nietsetzstift 5 in seiner gemäß der Figuren 1 und 2 vollständig in Richtung P2 zurückgezogenen Stellung. Die Form der Anlagekontur 14 des Anschlags 11 ist schalenartig mit einem Radius, der etwa einem Außenradius des Schaftes 12 des Halbhohlstanzniets 2 entspricht, welcher für alle mit dem Nietwerkzeug 1 verarbeitbaren unterschiedlich langen Halbhohlstanzniete gleich ist. Die Anlagekontur 14 bzw. der Anschlag 11 ist durchbohrt und die damit gebildete Niederdruckbohrung 10 ist mit Unterdruck beaufschlagt. Dadurch wird der Halbhohlstanzniet 2 bzw. dessen Schaft 12 an die Anlagekontur 14 gesaugt und der Halbhohlstanzniet 2 in der Vorlageposition 3 gehalten. Die Niederdruckbohrung 10 verläuft durch den Anschlag 11 bzw. den Nietsetzkopf 4 an eine geeignete Stelle insbesondere in einem störkonturunkritischen Bereich des Nietwerkzeugs 1, an der ein Sensor und/oder ein Druckschalter durch Messung des Unter- bzw. Niederdrucks in der Niederdruckbohrung 10 feststellen kann, ob sich ein Halbhohlstanzniet unter dem Nietsetzstift 5 befindet oder nicht. Damit wird durch Niederdruck kombiniert mit der Haltefunktion eine Anwesenheitskontrolle für ein gehaltenes Halbhohlstanzniet 2 bereitgestellt. So können eine Vielzahl beispielsweise mehrere zehntausend Halbhohlstanzniete derart behandelt werden, dass der Halbhohlstanzniet 2 in allen Raumlagen des Nietsetzkopfes 4 sicher angesaugt. Des Weiteren wird mit dem Unterdruck erreicht, dass sich die Niederdruckbohrung 10 nicht oder nur in einem tolerierbaren Maß durch Schmutz zusetzt.

Zudem kann ein Luftfilter in der Niederdruckbohrung 10 vorgesehen sein, mit welchem der Sensor von Partikeln freigehalten wird. Die Verschmutzung kann insbesondere durch z. B. Abrieb aus dem Zuführschlauch oder der Zuführung 6 bzw. einer Beschichtung des Halbhohlstanzniets 2 herrühren. Der Sensor zum Beispiel ein Drucksensor kann in einer weiteren Funktion außerdem prüfen, ob der Luftfilter verstopft ist.

In der Vorlageposition 3 befindet sich der Halbhohlstanzniet 2 mit einem Nietkopf 13, der außen über eine konkave Hohlkehle 13a in den Schaft 12 übergeht, in einer zumindest nahezu formschlüssigen Anlage an dem entsprechend konvex geformten Abschnitt der Anlagekontur 14. Entlang diesem kann der Halbhohlstanzniet 2 im ersten Bewegungsabschnitt aus der Vorlageposition 3 vom Nietsetzstift 5 in Richtung P4 und gleichzeitig etwas entgegen der Richtung P3 versetzt werden, bis die Längsachse L und die Längsachse S des Stempels übereinstimmen. Von dort wird der Halbhohlstanzniet 2 vom Nietsetzstift 5 linear in Richtung P4 weitergeschoben.

Um zu gewährleisten, dass der Halbhohlstanzniet 2 durch den vorfahrenden Nietsetzstift 5 aus der Vorlageposition 3 vorwärts bewegt werden kann, ist die Längsachse des Anschlags 11 und damit die die Anlagekontur 14 bildende Wand, bezogen auf die Stempellängsachse S, geringfügig bzw. um den Versatz V in Richtung P3 versetzt, so dass der mit dem Luftstrom 8 ankommende Halbhohlstanzniet 2 etwas weiter bzw. über die Mitte des hohlen Stempelkanals 9a in der Niederhalternase 9 fliegt. Damit wird der Halbhohlstanzniet 2 durch den gemäß P1 vorfahrenden Nietsetzstift 5 geringfügig relativ entgegen der Richtung P3 bewegt, bezogen auf die Stirnfläche 5a des Nietsetzstifts 5, also etwas zurück in Richtung des Zuführkanals 7. Nachdem sich der Nietkopf 13 mit seiner Hohlkehle 13a aus seiner zumindest nahezu formschlüssigen Lage an einem entsprechend der Form der Hohlkehle 13a angenäherten Abschnitt der Anlagekontur 14 heraus bewegt hat, wird er durch die zylindrische Wand des Stempelkanals 9a in der Niederhalternase 9 weitergeführt. Durch den Vorschub des Nietsetzstifts 5 wird der Halbhohlstanzniet 2 damit kontrolliert selbsttätig aus seiner formschlüssigen Lage aus der Vorlageposition 3 herausbewegt, ohne dass z. B. ein mechanischer Hebel oder ein Schnapper aktiviert werden muss.

Mit der erfindungsgemäßen Anordnung ist der Halbhohlstanzniet 2 in allen räumlichen Positionslagen des Nietsetzkopfes 4 sicher gehalten, insbesondere auch in einer Überkopflage des Nietsetzkopfes 4.

### Bezugszeichenliste:

- 1: Nietwerkzeug
- 2: Halbhohlstanzniet
- 2a: Stirnseite
- 3: Vorlageposition
- 4: Nietsetzkopf
- 5: Nietsetzstift
- 5a: Stirnfläche
- 6: Zuführung
- 7: Zuführkanal
- 8: Luftstrom
- 9: Niederhalternase
- 9a: Stempelkanal
- 10: Niederdruckbohrung
- 10a: Öffnung
- 11: Anschlag
- 12: Schaft
- 13: Nietkopf
- 13a: Hohlkehle
- 14: Anlagekontur

## Patentansprüche

1. Werkzeug (1) zum Anbringen eines einen Kopf (13) und eine im Bereich des Kopfes (13) vorhandenen Hohlkehle (13a) aufweisenden Fügeelements (2) an einem Bauteilabschnitt mit einer Matrizeneinheit, einem Stempel (5), der auf einer Arbeitsachse (A) des Werkzeugs (1) aus einer zurückbewegten Position am Werkzeug (1) zur Matrizeneinheit linear hinbewegbar und wieder zurückbewegbar ist, wobei die Arbeitsachse (A) mit einer Stempellängsachse zusammenfällt, einem Positionierabschnitt zum Halten eines in einer Vorlageposition (3) vorgelegtes Fügeelement (2), so dass der Stempel (5) bei seiner Hinbewegung zur Matrizeneinheit in Richtung des Bauteilabschnitts das Fügeelement (2) mitnehmen kann, wobei der Positionierabschnitt eine Anlagekontur (14) umfasst, um ein Fügeelement (2) mit abgestimmter Außenform durch passende Anlage an der Anlagekontur (14) in einer durch die Form der Anlagekontur (14) vorgegebenen Ausrichtung in der Vorlageposition (3) zu halten **dadurch gekennzeichnet, dass** die Anlagekontur (14) einen in Richtung der Arbeitsachse konvex verlaufenden auf eine Form der am Fügeelement (2) vorhandenen Hohlkehle (13a) abgestimmten Abschnitt aufweist, und der Positionierabschnitt derart ausgestaltete Positioniermittel aufweist, dass die Längsachse des Fügeelements (2) in der Vorlageposition (3) parallel ausgerichtet zur Arbeitsachse versetzt ist, und dass das Fügeelement aus der Vorlageposition beim Mitnehmen durch den Stempel entgegen der Bewegungsrichtung beim Herantransportieren in die Vorlageposition etwas zurückbewegt wird.

2. Werkzeug nach Anspruch 1, **dadurch gekennzeichnet, dass** für eine vorgegeben geführte Bewegung des Fügeelements (2) aus der Vorlageposition (3) heraus Führungsmittel im Bereich der Vorlageposition (3) derart ausgebildet sind, dass das Fügeelement (2) aus der Vorlageposition (3) herausbewegbar ist, bis die Längsachse des Fügeelements (2) mit der Arbeitsachse zusammenfällt.

3. Werkzeug nach einem der vorhergehenden Ansprüche, **dadurch gekennzeichnet, dass** die Anlagekontur (14) im Bereich eines Bewegungskanals (9a) für den Stempel (5) ausgebildet ist.

4. Werkzeug nach einem der vorhergehenden Ansprüche, **dadurch gekennzeichnet, dass** die Anlagekontur (14) gegenüberliegend zu einer Zuführöffnung zum Zuführen eines Fügeelements (2) in die Vorlageposition (3) vorhanden ist.

5. Werkzeug nach einem der vorhergehenden Ansprüche, **dadurch gekennzeichnet, dass** die Anlagekontur (14) zumindest bereichsweise eine konkave Form aufweist, welche auf eine Außenform des Fügeelements (2) abgestimmt ist.

6. Werkzeug nach einem der vorhergehenden Ansprüche, **dadurch gekennzeichnet, dass** im Bereich der Anlagekontur (14) eine Verbindung zu einer Unterdruckleitung (10) ausgebildet ist.

## Claims

1. Tool (1) for attaching a joining element (2), having a head (13) and a fillet (13a) present in the region of the head (13), to a component portion, having a die unit, a punch (5), which is movable linearly towards the die unit on a working axis (A) of the tool (1) from a retracted position on the tool (1) and is retractable again, wherein the working axis (A) coincides with a punch longitudinal axis, a positioning portion for holding a joining element (2) presented in a presentation position (3) such that, during its movement towards the die unit in the direction of the component portion, the punch (5) can carry along the joining element (2), wherein the positioning portion comprises a bearing contour (14) in order to hold a joining element (2) with a coordinated external shape in the presentation position (3), in an orientation defined by the shape of the bearing contour (14), by bearing in a fitting manner against the bearing contour (14), **characterized in that** the bearing contour (14) has a portion that extends convexly in the direction of the working axis and is coordinated with the shape of the fillet (13a) present on the joining element (2), and the positioning portion has positioning means that are designed in such a way that the longitudinal axis of the joining element (2) in the presentation position (3) is offset with respect to the working axis in a manner oriented in parallel, and **in that** the joining element is retracted slightly from the presentation position upon being carried along by the punch counter to the direction of movement when being transported into the presentation position.

2. Tool according to Claim 1, **characterized in that**, for a defined guided movement of the joining element (2) out of the presentation position (3), guide means in the region of the presentation position (3) are configured such that the joining element (2) is able to be moved out of the presentation position (3) until the longitudinal axis of the joining element (2) coincides with the working axis.

3. Tool according to either of the preceding claims, **characterized in that** the bearing contour (14) is formed in the region of a movement channel (9a) for the punch (5) .

4. Tool according to one of the preceding claims, **characterized in that** the bearing contour (14) is present opposite a feed opening for feeding a joining element (2) into the presentation position (3).

5. Tool according to one of the preceding claims, **characterized in that** the bearing contour (14) at least regionally has a concave shape that is coordinated with an external shape of the joining element (2).

6. Tool according to one of the preceding claims, **characterized in that** a connection to a vacuum line (10) is formed in the region of the bearing contour (14).

## Revendications

1. Outil (1) permettant de mettre en place un élément d'assemblage (2) comportant une tête (13) et une gorge (13a) présente au niveau de la tête (13) sur une partie d'élément de construction, comprenant une unité de matrice, un poinçon (5) pouvant être déplacé linéairement sur un axe de travail (A) de l'outil (1) depuis une position reculée sur l'outil (1) en direction de l'unité de matrice et être ramené en position reculée, l'axe de travail (A) coïncidant avec un axe longitudinal de poinçon, une partie de positionnement destinée à maintenir un élément d'assemblage (2) alimenté dans une position d'alimentation (3) de sorte que le poinçon (5) lors de son déplacement en direction de l'unité de matrice peut entraîner l'élément d'assemblage (2) en direction de la partie d'élément de construction, dans lequel la partie de positionnement comprend un contour d'appui (14) pour maintenir un élément d'assemblage (2) d'une forme extérieure adaptée dans la position d'alimentation (3) dans une orientation spécifiée par la forme du contour d'appui (14) par un appui correspondant contre le contour d'appui (14), **caractérisé en ce que** le contour d'appui (14) présente une partie s'étendant de manière convexe en direction de l'axe de travail et adaptée à une forme de la gorge (13a) présente sur l'élément d'assemblage (2), et la partie de positionnement présente des moyens de positionnement configurés de telle sorte que l'axe longitudinal de l'élément d'assemblage (2) est décalé par rapport à l'axe de travail dans la position d'alimentation (3) en étant orienté en parallèle, et **en ce que** l'élément d'assemblage est légèrement ramené en arrière depuis la position d'alimentation lorsqu'il est entraîné par le poinçon à l'opposé de la direction de déplacement lorsqu'il est transporté dans la position d'alimentation.

2. Outil selon la revendication 1, **caractérisé en ce que** pour un déplacement effectué de manière spécifiée de l'élément d'assemblage (2) depuis la position d'alimentation (3), des moyens de guidage sont réalisés au niveau de la position d'alimentation (3) de telle sorte que l'élément d'assemblage (2) peut être déplacé hors de la position d'alimentation (3) jusqu'à ce que l'axe longitudinal de l'élément d'assemblage (2) coïncide avec l'axe de travail.

3. Outil selon l'une quelconque des revendications précédentes, **caractérisé en ce que** le contour d'appui (14) est réalisé au niveau d'un canal de déplacement (9a) pour le poinçon (5).

4. Outil selon l'une quelconque des revendications précédentes, **caractérisé en ce que** le contour d'appui (14) est présent à l'opposé d'une ouverture d'amenée pour amener un élément d'assemblage (2) dans la position d'alimentation (3).

5. Outil selon l'une quelconque des revendications précédentes, **caractérisé en ce que** le contour d'appui (14) présente au moins par endroits une forme concave qui est adaptée à une forme extérieure de l'élément d'assemblage (2).

6. Outil selon l'une quelconque des revendications précédentes, **caractérisé en ce qu'**une connexion à une conduite à dépression (10) est réalisée au niveau du contour d'appui (14).
